# EUROPÄISCHE PATENTSCHRIFT

(11) **EP 1 927 394 B1**
(45) Veröffentlichungstag und Bekanntmachung des Hinweises auf die Patenterteilung: **26.08.2009**
(21) Anmeldenummer: 07117558.2
(22) Anmeldetag: 28.09.2007
(51) Int. Cl.: B01J 6/00, B01J 12/02, B01J 19/00, C01B 13/14

(54) **Verfahren und thermischer Reaktor zur Herstellung von Partikeln**
Method and thermal reactor for creating particles
Procédé et réacteur thermique destinés à la fabrication de particules

(30) Priorität: 29.09.2006 DE 102006046803
(43) Veröffentlichungstag der Anmeldung: 04.06.2008
(73) Patentinhaber: IBU-tec advanced materials AG, 99425 Weimar (DE)
(72) Erfinder: Leidolph, Lars, 99084, Erfurt (DE); Ambrosius, Stefan, 99439, Berlstedt (DE)
(74) Vertreter: Finger, Catrin

(56) Entgegenhaltungen:
- EP-A- 1 491 497
- DE-A1- 10 109 892
- DE-A1-102005 002 659
- DE-C1- 19 614 430

## Beschreibung

Die Erfindung betrifft ein Verfahren und einen thermischen Reaktor zur Herstellung feinteiliger Partikel. Solche Partikel weisen typischerweise mittlere Korngrößen von 10 nm bis 100 µm auf, schließen also auch nanoskalige Partikel (auch Nanopartikel genannt) mit Korngrößen kleiner 100 nm mit ein. Darüber hinaus betrifft die Erfindung eine Vorrichtung, welche mehrere miteinander gekoppelte thermische Reaktoren umfasst.

Atome oder Moleküle, die Teil einer Oberfläche sind, haben andere elektronische und chemische Eigenschaften, als ihre Atome oder Moleküle im Materialinneren. Je kleiner ein Partikel ist, desto höher ist sein Anteil an Oberflächenatomen. Entsprechend können sehr feinteilige Materialien, besonders Nanopartikeln, ganz andere mechanische, elektronische, chemische oder optische Eigenschaften haben als chemisch - mineralogisch identische größere Partikel und machen sie deshalb für spezifische Anwendungen besonders interessant.

Im Weiteren wird unter feinteiligen Partikeln eine Partikelgröße von < 20 µm verstanden. Definitionsgemäß wird damit der spezielle Bereich der so genannten Nanopartikel (Partikelgröße < 100 nm) mit eingeschlossen. Weiterhin werden Pulver mit einem mittlerem Partikeldurchmesser < 20 µm als feinteilige Pulver bezeichnet.

Zur Herstellung von feinteiligen Pulvern haben sich im Wesentlichen die folgenden Herstellungsverfahren etabliert; chemische Herstellung in Lösungen (z.B. Sol-Gel-Methode), Herstellung im Plasma, Herstellung aus der Gasphase (Aerosolprozess). Je nach Einsatzgebiet der Nanoteilchen ist meist eine genau definierte und enge Partikelgrößenverteilung erforderlich. Abhängig von der chemischen Natur der gewünschten Nanoteilchen eignet sich das eine oder andere Verfahren besser, um ein gutes Ergebnis zu erreichen. Meist liefern Verfahren in Lösung oder Verfahren der Selbstorganisierung die besten Ergebnisse, sind aber großtechnisch nur schwer oder gar nicht durchführbar.

Oxid- oder Mischoxid- Pulver werden im Wesentlichen mit folgenden Verfahren hergestellt: Mischen, Trocknen und nachfolgende thermische Zersetzung von Oxide, Carbonaten Nitraten, Acetaten, Chloriden o.a. Salzen (Festkörper- Reaktion); Kofällung sowie nachfolgende Trocknung und Kalzinierung; Sol- Gel-Technik; Hydrolyse von Alkoxiden; Plasma- Sprühverfahren; Sprühpyrolyse wässriger und organischer Salzlösungen.

Die so genannte Sprühpyrolyse gehört zu den Aerosolverfahren, die durch Versprühen von Lösungen, Suspensionen oder Dispersionen in einen durch unterschiedliche Art und Weise erhitzten Reaktionsraum (Reaktor) sowie die Bildung und Abscheidung von Feststoffpartikeln gekennzeichnet sind. Im Gegensatz zur Sprühtrocknung mit Heißgastemperaturen < 300°C finden bei der Sprühpyrolyse als Hochtemperaturprozess außer der Verdampfung des Lösungsmittels zusätzlich die thermische Zersetzung der verwendeten Edukte (z. B. Salze) sowie die Neubildung von Stoffen (z. B. Oxide, Mischoxide) statt. Durch Unterschiede in der Wärmeerzeugung und -übertragung, der Zuführung von Energie und Aufgabeprodukt, der Art der Aerosolerzeugung und der Art der Partikelabscheidung gibt es eine Vielzahl von Verfahrensvarianten, die auch durch verschiedene Reaktor-Bauarten gekennzeichnet sind. Zu nennen sind hier beispielsweise die Ausführungsformen Heißwandreaktor, Flammenpyrolyse-Reaktor und Heißgas- Reaktor bzw. Pulsationsreaktor. Die genannten Reaktoren können aufgrund der sehr kurzen Verweilzeiten unter der Rubrik Kurzzeitreaktoren zusammengefasst werden.

Eine Ausführungsform der so genannten Kurzzeitreaktoren ist der Pulsationsreaktor, wenngleich sich das Pulsationsreaktor-Verfahren aufgrund verfahrenstechnischer Besonderheiten von den genannten anderen Kurzzeitreaktoren deutlich abgrenzt. Der Pulsationsreaktor unterscheidet sich von den oben beschriebenen Verfahren grundsätzlich dadurch, dass der Heißgasstrom durch eine pulsierende Verbrennung erzeugt wird, dass das Aufgabematerial durch eine thermoschockartige Zersetzungsreaktion in wenigen Millisekunden umgewandelt wird, dass die hohen Strömungsturbulenzen der pulsierenden Verbrennung einen erhöhten Wärmeübergang erzeugen, der entscheidend für den Ablauf der Phasenreaktion im Material und für einen vollständigen Umsatz innerhalb kurzer Verweilzeiten ist, und dass der mögliche spezifische Materialdurchsatz gegenüber den anderen genannten Verfahren deutlich höher ist, dass die Partikelgröße und die spezifische Oberfläche der Partikel durch die Wahl der Edukte und der Prozessparameter einstellbar ist.

Die mittels des Pulsationsreaktor-Verfahrens hergestellten feinteiligen Pulver zeichnen sich gegenüber anderen Verfahren durch sphärische Partikelform und hohe Reaktivität, aufgrund der extrem kurzen Verweilzeit und dem damit verbundenen hohem Grad an Gitterfehlordnungen, aus.

Das Wirkprinzip des Pulsationsreaktors gleicht dabei dem eines akustischen Hohlraumresonators, der aus einer Brennkammer, einem Resonanzrohr, das einen gegenüber der Brennkammer deutlich verminderten Strömungsquerschnitt aufweist besteht. Aus der WO 02/072471 bzw. aus der DE 10 2004 044 266 A1 sind Pulsationsreaktoren bekannt. Bei den dort beschriebenen Pulsationsreaktoren ist die Brennkammer eingangsseitig mit einem oder mehreren Aeroventilen zum Eintritt von Brenngasgemischen ausgestattet. Der Brennstoff sowie die notwendige Verbrennungsluft gelangen gemeinsam (vorgemischt in einer Vorgeschalteten Mischkammer) über die Ventile in die Brennkammer und werden dort gezündet, verbrennen sehr schnell und erzeugen eine Druckwelle in Richtung des Resonanzrohres, da der Gaseintritt durch die aerodynamische Ventile bei Überdruck weitgehend verschlossen wird. Durch ein infolge der Verbrennung in das Resonanzrohr ausströmendes Heißgas wird der Überdruck in der Brennkammer reduziert, so dass durch die Ventile neues Brenngasgemisch nachströmt und selbst zündet. Dieser Vorgang des Schließens und Öffnens der Ventile durch Druck und Unterdruck erfolgt selbst regelnd periodisch. Der pulsierende Verbrennungsprozess in der Brennkammer setzt mit der Ausbreitung einer Druckwelle im Resonanzrohr Energie frei und regt dort eine akustische Schwingung an. Derartige pulsierende Strömungen sind durch einen hohen Turbulenzgrad gekennzeichnet. Die hohen Strömungsturbulenzen verhindern den Aufbau einer Temperaturhülle um die sich aus der Rohstoffmischung bildende Partikel, wodurch ein höherer Wärmeübertrag, d.h. eine schnellere Reaktion bei vergleichsweise niedrigen Temperaturen, möglich ist. Die dadurch bedingten kurzen Verweilzeiten der Partikel im Reaktor führen zu einem besonders hohen Materialdurchsatz. Typischerweise liegt die Verweilzeit bei weniger als einer Sekunde. Zudem erreicht ein besonders großer Anteil der gebildeten Partikel eine gewünschte sphärische Form. Die schnelle Reaktion führt weiterhin bei der Ausbildung der festen Phase der Partikel zu einem hohen Anteil an Gitterfehlordnungen und infolgedessen zu einer hohen Reaktivität der Partikel. Zur Abscheidung von Reaktionsprodukten aus dem Heißgasstrom dient eine geeignete Abscheideinrichtung für Feinstpartikel.

Nachteilig bei den bekannten Pulsationsreaktoren ist, dass es durch die gemeinsame Aufgabe von Verbrennungsluft und Brennstoff über die aerodynamischen Ventile zu Flammendurchschlägen durch das Ventil kommt. Die notwendige Sicherheitsvorrichtung schaltet in diesen Fällen den Brenner sofort ab. Erst nach dem Verstreichen einer gewissen Zeitspanne kann der Brenner erneut gezündet werden. Die Folge ist der Abfall der Prozesstemperatur im Reaktor und folglich eine inhomogene Produktqualität.

Ein weiterer Nachteil bei den bekannten Pulsationsreaktoren ist, dass die Prozesstemperatur in der Brennkammer im Allgemeinen oberhalb von 750°C liegt, damit eine vollständige Verbrennung in der Brennkammer sichergestellt werden kann. Andernfalls findet keine vollständige Verbrennung des Brennstoffes statt, so dass Kohlenstoff oder Kohlenmonoxid aus der Brennkammer in das Resonanzrohr und eventuell weiter in den Filter transportiert wird und sich dort in Verbindung mit Sauerstoff umsetzt. Dadurch kann es zu einer Strähnenbildung im Heißgasstrom (Turbulenzgrad reduziert) und lokalen Wärmespots in der Anlage und folglich zu einer inhomogenen Produktqualität kommen. Daraus ergeben sich insbesondere bei der Herstellung von feinteiligen Pulvern mittels der Pulsationsreaktortechnologie folgende Einschränkungen:
- Durch die thermische Behandlung von Rohstoffen oder Rohstoffmischungen oberhalb von 750°C kann es zu Sintererscheinungen kommen, die zu Partikelvergrößerung und Agglomeration führen. Beispiel dafür ist die Herstellung von Zinkoxid ZnO bei 800 °C, bei der bedingt durch die hohe Temperatur die gebildeten Partikel deutliche Sintererscheinungen in Form von Sinterhälsen aufweisen.
- Darüber hinaus können bestimmte Pulver mit bestimmter Phasenzusammensetzung nicht oder nur schwer hergestellt werden, da deren Phase nur bei Temperaturen kleiner 750°C stabil ist. Beispiele dafür ist die Herstellung von Hydroxiden oder Hydraten (zum Beispiel vom Typ Ca-Phosphat wie Brushit oder Isoklas), aber auch bestimmter Modifikationen (beispielsweise TiO₂ in der ausschließlichen Anatas-Modifikation).

Es ist daher aus der DE 10 2004 044 266 A1 bekannt, das Ausgangsmaterial im Resonanzrohr einzubringen bzw. ein Sekundärgas zur Abkühlung der Verbrennungsabgase einzurühren. Während in der Brennkammer Temperaturen oberhalb 750°C notwendig sind, ergeben sich daraus ohne Kühlung im Resonanzrohr Mindesttemperaturen von 650°C. Durch Zugabe von definierten Kühlluftmengen kann diese Temperatur noch einmal gesenkt werden. Nachteilig bei dieser Variante ist jedoch die damit einhergehende deutliche Verkürzung der Gesamtverweilzeit im Reaktor. Ein reduzierter Stoffumsatz sowie der teilweise Verbleib von flüchtigen Komponenten (z. B. Reste von Lösungsmitteln, Nitraten, Chloriden, etc.) können Folge der verkürzten Verweilzeit im Reaktor sein.

Ein weiterer bekannter Nachteil aus dem technischen Betrieb des bekannten Pulsationsreaktors ist, dass es durch die thermoschockartige Behandlung der Rohstoffmischung, speziell bei Verwendung von wässrigen Rohstoffmischungen, zu einer Krustenbildung bei den eingesprühten Rohstofftröpfchen durch Verdampfung an der Tröpfchenoberfläche und der damit verbundenen Aufkonzentration der Inhaltsstoffe an der Tröpfchenoberfläche, kommen kann. Diese Kruste steht zunächst dem Entweichen von gebildeten gasförmigen Stoffen (z.B. thermische Zersetzung der Lösungsmittel oder Abspaltung von Nitrat) aus dem Inneren der Rohstofftröpfchen entgegen. Durch den Gasdruck werden jedoch letztlich die Krusten aufgebrochen und es bilden sich Partikel mit so genannter Hohlkugelstruktur. Die Bildung von Partikeln mit Hohlkugelstruktur ist jedoch für bestimmte Anwendungen unerwünscht. Hier wird eine sphärische Form bevorzugt. Durch die Reduzierung des Energieeintrags am Zuführungspunkt der Rohstoffmischung in den Pulsationsreaktor, zum Beispiel durch die Begrenzung der Prozesstemperatur in der Brennkammer, kann eine solche Krustenbildung auf den sich bildenden Partikeln vermieden werden. Aufgrund einer derartigen Reduzierung der Prozesstemperatur in der Brennkammer in Kombination mit der kurzen Verweilzeit im derzeitigen Pulsationsreaktor erfolgt nicht in jedem Fall eine vollständige Stoffumwandlung und die Partikel enthalten teilweise einen Glühverlust größer als 5 %. Der Glühverlust bezeichnet den Anteil an organischer Substanz einer Probe in Prozent. Es gelingt jedoch am derzeitigen Pulsationsreaktor durch Einbringen einer zusätzlichen Menge von Brennstoff (Erdgas oder Wasserstoff) den Energieeintrag zu dem Zeitpunkt zu erhöhen, an dem zum Beispiel kein Lösungsmittel mehr im Inneren der Partikel vorhanden ist (Zweitfeuerung). Diese Energie dient zum Beispiel dazu, noch vorhandene Salzreste thermisch zu zersetzen und die Stoffwandlung, zum Beispiel Phasenbildung, zu beschleunigen bzw. abzuschließen. Da aber die Verweilzeit ab dem Punkt der Zweitfeuerung deutlich verkürzt im Vergleich zur Gesamtverweilzeit ist, muss die Prozesstemperatur durch die Zweitfeuerung oft deutlich erhöht werden (höhere Prozesstemperatur erhöht die Reaktionsgeschwindigkeit), um eine vollständige Stoffwandlung oder eine Reduzierung des Glühverlustes zu erreichen. Diese höhere Prozesstemperatur bedeutet gleichzeitig eine verstärkte Sinterung und damit mögliche Agglomeration der Partikel.

Ein weiterer Nachteil des derzeitigen Pulsationsreaktors für die Behandlung bestimmter Stoffgebiete ist die extrem kurze Verweilzeit. Während für viele Produktgruppen die thermoschockartige Behandlung innerhalb weniger Millisekunden gerade zu der gewünschten Produktqualität führt (zum Beispiel ist der hohe Fehlordnungsgrad aufgrund der kurzen Verweilzeiten besonders für die Herstellung von Katalysatoren erwünscht), erweist sich die extrem kurze Verweilzeit für andere Produktgruppen, bei denen eine vollständige Phasenumwandlung oder vollständige Kalzination gewünscht ist, teilweise als nachteilig.

Der Erfindung liegt daher die Aufgabe zu Grunde, ein verbessertes Verfahren und einen thermischen Reaktor zur Herstellung von feinteiligen Partikeln anzugeben, wobei ein stabiler Anlagenbetrieb und damit die Voraussetzung für die Produktion von feinteiligen Pulvern mit homogener Produktqualität ermöglicht sein sollten sowie eine längere Verweildauer gegenüber der bisherigen Pulsationsreaktortechnologie ermöglicht sein sollte.

Die Aufgabe wird erfindungsgemäß gelöst durch ein Verfahren mit den Merkmalen des Anspruchs 1 und einen thermischen Reaktor mit den Merkmalen des Anspruchs 6. Darüber hinaus wird die Aufgabe durch eine Vorrichtung aus miteinander gekoppelten thermischen Reaktoren mit den Merkmalen des Anspruchs 9 gelöst.

Vorteilhafte Ausgestaltungen der Erfindung sind Gegenstand der Unteransprüche.

Erfindungsgemäß wird die bestehende Pulsationsreaktortechnologie dahingehend verbessert, dass die Zuführung von Verbrennungsluft getrennt von der Zuführung von Brennstoff in die Brennkammer erfolgt. Unter Verbrennungsluft wird hier jegliche Art von geeigneten Verbrennungsgasen, zum Beispiel Sauerstoff, normale Umgebungsluft oder die Kombination verschiedener Gase, verstanden. Der Brennstoff wird getrennt von den Verbrennungsgasen über eine separate Zuführung kontinuierlich in die Brennkammer, also nicht über aerodynamische Ventile eingebracht. Die Verbrennungsgase, zum Beispiel Verbrennungsluft werden über aerodynamische Ventile der Brennkammer zugeführt. Bei Kontakt des kontinuierlich aufgegebenen Brennstoffs mit der Verbrennungsluft erfolgt die Verbrennung des Brennstoffes, einhergehend mit dem Aufbau eines Überdrucks in der Brennkammer. Damit werden die aerodynamischen Ventile weitestgehend verschlossen, keine weitere Verbrennungsluft tritt in die Brennkammer ein, mit der Folge, dass der weiterhin kontinuierlich aufgegebene Brennstoff sich nicht vollständig umsetzt. Der Überdruck wird durch das Ausströmen der Gase aus der Brennkammer in das Resonanzrohr reduziert. Dadurch öffnen erneut die aerodynamischen Ventile, Verbrennungsluft strömt in die Brennkammer und reagiert mit dem vorhandenen Brennstoff. Dieser Vorgang des Schließens und Öffnens der Ventile durch Druck und Unterdruck erfolgt selbst regelnd periodisch. Entsprechend resultiert daraus ein pulsierender Verbrennungsprozess in der Brennkammer, der mit der Ausbreitung einer Druckwelle im Resonanzrohr Energie freisetzt und dort eine akustische Schwingung aufgrund der Reaktorgeometrie anregt. Resultat ist ein pulsierender Heißgasstrom, vergleichbar mit einem in der bestehenden Pulsationsreaktortechnologie, hier jedoch auf Grundlage einer veränderten Brennstoffzuführung. Vorteil der technologischen Veränderung der Brennstoffzuführung ist, dass ein Überschlagen der Verbrennungsflamme durch die aerodynamischen Ventile bzw. ein Rückschlag über die kontinuierliche Brennstoffzuführung sicher verhindert ist. Damit ergibt sich ein deutlich stabilerer Anlagenbetrieb mit der Folge einer homogeneren Produktqualität.

Darüber hinaus kann der thermische Reaktor ausgangsseitig an einem schließenden Konus der Brennkammer zumindest ein Strömungselement umfassen, das zur besseren Durchmischung der Rohstoffe und Rohstoffmischung mit Hilfsstoffen dient und eine Verwirbelung unterstützt. In einer möglichen Ausführungsform ragt hierbei als Strömungselement das Resonanzrohr zumindest teilweise in den schließenden Konus hinein.

Beim Verfahren werden vorzugsweise feinteilige Partikel mit einer mittleren Korngröße von 10 nm bis 100 µm hergestellt, wobei der pulsierende Heißgasstrom mittels eines Pulsationsreaktors mit verbesserter Brennstoff- und Verbrennungsgaszuführung erzeugt wird. Als Brenngas eignet sich grundsätzlich jedes Gas, das zur Heißgaserzeugung geeignet ist. Vorzugsweise wird Erdgas und/oder Wasserstoff verwendet. Alternativ kann auch Propan oder Butan oder Gemische aus verschiedenen Brennstoffen als Brennstoff verwendet werden.

Als Verbrennungsluft wird Umgebungsluft verwendet, alternativ kann Sauerstoff oder ein Gemisch aus beiden eingesetzt werden. Daneben kann die Gasatmosphäre durch Zugabe weiterer Gase, zum Beispiel CO₂, gezielt eingestellt werden und bietet damit eine weitere Steuerungsgröße zum Einstellen der Reaktionsparameter bei der thermischen Herstellung und Behandlung der feinteiligen Partikel.

Eine Verlängerung der Verweilzeit sowie eine mögliche Reduzierung der Behandlungstemperatur werden erfindungsgemäß über die Kopplung des Pulsationsreaktors mit mindestens einen weiteren Reaktor, also über einen mehrstufigen thermischen Prozess realisiert. Dazu sind mindestens zwei thermische Reaktoren miteinander gekoppelt. In einer ersten Verbrennungsstufe wird in einem als Pulsationsreaktor ausgebildeten ersten thermischen Reaktor ein pulsierender Heißgasstrom erzeugt. Der zweite thermische Reaktor dient als Reaktionsraum zur Bildung der feinteiligen Partikel. Durch die separate Erzeugung des pulsierenden Heißgases in einem Pulsationsreaktor und der Einleitung dieses pulsierenden Heißgases in einen zweiten thermischen Reaktor mit zweiten Reaktionsraum (im folgenden Applikationsraum genannt) werden vergleichbare Produkteigenschaften wie beim einzelnen Pulsationsreaktor aufgrund der ebenfalls wirkenden thermoschockartigen Zersetzungsreaktion der Rohstoffe in Kombination mit einer homogenen Material- und Temperaturverteilung im angekoppelten Applikationsraum aufgrund der hohen Strömungsturbulenzen auch für Rohstoffe niedrigerer Prozesstemperatur erreicht.

Vorteilhafterweise wird zumindest einer der thermischen Reaktoren, insbesondere der erste thermische Reaktor mit einer Verbrennungsfrequenz von 3 Hz bis 150 Hz, insbesondere von 10 Hz bis 70 Hz betrieben. In diesem Frequenzbereich können die verfahrenstechnischen Parameter besonders stabil über längere Zeit gesteuert und damit eine gleich bleibende Produktqualität sichergestellt werden. Die Pulsationsfrequenz kann über die Geometrie des Reaktors eingestellt und über die Brennstoffmenge bzw. Verbrennungsluft gezielt variiert werden.

Darüber hinaus ermöglicht die Entkoppelung der Heißgaserzeugung von der thermischen Behandlung eine vollständige Verbrennung der Brenngase im ersten thermischen Reaktor zur Erzeugung der pulsierenden Heißgasströmung bei Temperaturen oberhalb 750 °C. Erfindungsgemäß erfolgt die Erzeugung des pulsierenden Heißgasstrom (wie oben ausgeführt) durch die getrennte Aufgabe von Verbrennungsluft (pulsierend über die aerodynamischen Ventile) und Brennstoff (kontinuierlich) in die Brennkammer des Pulsationsreaktors. Je nach Art des folgenden gekoppelten Reaktors (als Reaktionsraum dienend) und der Wahl der Prozessparameter können die Verweilzeit sowie das thermische Behandlungsregime eingestellt bzw. an die Rohstoffmischung angepasst werden. Damit ist die Geometrie des zweiten Reaktors eine wesentliche Steuergröße für die Reaktionsbedingungen des thermischen Prozesses. Ferner ist mittels des als Reaktions- oder Applikationsraum dienenden zweiten Reaktors die Ausbreitung der pulsierenden Heißgasströmung sowie der Verweilzeit der Heißgasströmung und damit der Verweilzeit des Materials im thermischen Prozess einstellbar und vorgebbar. In drei bevorzugte Verfahrensvarianten kann dabei unterschieden werden:
- Die Prozesstemperaturen im angekoppelten Reaktor sind vergleichbar denen im ersten Reaktor.
- Die Prozesstemperatur im zweiten Reaktor ist deutlich reduziert gegenüber der im ersten Reaktor.
- Die Prozesstemperatur im zweiten Reaktor ist deutlich erhöht gegenüber der im ersten Reaktor.

Bei der ersten bevorzugten Verfahrensvariante, die Prozesstemperaturen im angekoppelten Reaktor sind vergleichbar denen im ersten Reaktor, wird erreicht, dass sich die Verweilzeit bei diesen Prozesstemperaturen verlängert. Diese verlängerte Verweilzeit führt zu einer prinzipiellen Verbesserung des Phasenumsatzes. Beispielsweise kann trotz niedrigerer Prozesstemperaturen aufgrund der längeren Verweilzeit der gleiche Phasenumsatz erzielt werden, hier jedoch mit geringerer Agglomeration aufgrund der niedrigeren Prozesstemperatur. Durch eine geeignete Gestaltung des zweiten Reaktors und der Wahl des Ortes der Materialaufgabe, z. B. im ersten Reaktor, im zwischen den ersten und dem zweiten Reaktor angeordneten Resonanzrohr und/oder im zweiten Reaktor, kann die Verweilzeit gegenüber dem derzeitigen Pulsationsreaktor teilweise erheblich verlängert werden. Verweilzeiten von > 1 Sekunde bis hin zu Minuten können realisiert werden. Damit ergeben sich besondere Möglichkeiten der Stoffbehandlung, in diesem Spezialfall bei Behandlungstemperaturen von größer 750 °C.

Bei der zweiten bevorzugten Verfahrensvariante, die Prozesstemperatur im zweiten Reaktor ist deutlich reduziert gegenüber der im ersten Reaktor, erschließt die Möglichkeit der reduzierten Prozesstemperatur im Bereich von 100 °C bis 750 °C bei ausreichenden Verweilzeiten (abhängig von der Geometrie des Reaktors) die Produktion von feinteiligen Partikeln neuer Produktgruppen unter den besonderen Bedingungen des pulsierenden Heißgasstroms im Pulsationsreaktor. Beispielsweise gelingt so die Bildung von feinteiligen Hydroxid- bzw. Hydratpulvern, wie zum Beispiel Ca-Phasphat-Hydrate. Zur Einstellung einer gegenüber dem ersten thermischen Reaktor geringeren Prozesstemperatur im zweiten thermischen Reaktor wird der Heißgasstrom zumindest zwischen der ersten und der zweiten Verbrennungsstufe durch Einführen eines Kühlmediums, insbesondere von Kühlgas und/oder Kühlflüssigkeit gekühlt. Beispielsweise wird hierzu nach dem ersten thermischen Reaktor Luft oder Wasser in den Heißgasstrom derart eingeleitet bzw. eingesprüht, dass der Heißgasstrom nicht in seiner grundsätzlichen Strömungsrichtung verändert wird bzw. die Pulsierung der Heißgasströmung nicht vollständig unterbunden wird. Dabei vermischt sich das Kühlgas oder die Kühlflüssigkeit mit dem Heißgasstrom zu einer turbulenten Strömung. Der aus der pulsierenden Verbrennung im ersten thermischen Reaktor resultierende Heißgasstrom weist dabei Strömungsturbulenzen auf, deren Turbulenzgrad in einer bevorzugten Ausführungsform 5- bis 10-fach über dem Turbulenzgrad einer stationären Strömung liegt. Der in den zweiten thermischen Reaktor eingeführte und gekühlte Heißgasstrom weist einen noch ausreichend hohen Turbulenzgrad auf. Zusätzlich kann auch nach dem zweiten thermischen Reaktor Kühlgas und/oder Kühlflüssigkeit zur weiteren Kühlung eingeleitet werden. Die Temperatur des Heißgasstroms im ersten thermischen Reaktor liegt vorzugsweise im Bereich von 600 °C bis 1400 °C, vorzugsweise oberhalb von 750 °C. Zur Erhaltung des Turbulenzgrades sind die beiden thermischen Reaktoren über ein Resonanzrohr miteinander gekoppelt. Zur Reduzierung der Prozesstemperatur und damit Einstellung eines weiteren Temperaturbereiches wird der aus dem ersten thermischen Reaktor geführte Heißgasstrom gekühlt, so dass sich im zweiten thermischen Reaktor eine Temperatur in einem Bereich von 100 °C bis 800 °C, insbesondere von deutlich kleiner 750 °C einstellt.

Bei der dritten bevorzugten Verfahrensvariante, die Prozesstemperatur im zweiten Reaktor ist deutlich erhöht gegenüber der im ersten Reaktor, eignet sich die zunächst geringere Prozesstemperatur im ersten Reaktor für die Aufgabe von wässrigen Rohstoffmischungen, bei denen das bekannte technische Problem der Krustenbildung auftritt. Typischerweise reicht die geringere Prozesstemperatur am Einsprühpunkt nicht für eine vollständige Phasenumwandlung aus. Notwendig ist in diesen Fällen eine nachträgliche Temperaturerhöhung (Zweitfeuerung). Vorteil des erfindungsgemäßen thermischen Reaktors mit geänderter Brennstoffzuführung gegenüber dem bisherigen herkömmlichen Pulsationsreaktor ist jedoch, dass die Verweilzeit durch die Geometrie eines weiteren, angekoppelten Reaktors (Behandlungsraum) einstellbar ist und somit gegenüber der Verweilzeit im bisherigen herkömmlichen Reaktor deutlich verlängert werden kann. Dabei wird die Prozesstemperatur durch die Zweitfeuerung aufgrund der nun längeren Verweilzeit nicht zwangsläufig übermäßig hoch gewählt.

Die Geometrie des zweiten Reaktors beeinflusst maßgeblich die prozesstechnischen Parameter, wie beispielsweise Pulsation und Turbolenzgrad des Heißgasstroms, Prozesstemperatur, Verweilzeit, und damit die Reaktionsbedingungen für die eingebrachte Rohstoffmischung und letztlich die Eigenschaften der gebildeten feinteiligen Partikel. Somit stellt die Geometrie maßgeblich eine Steuergröße für den Prozess, den Reaktionsverlauf und den Produkteigenschaften dar. In einer möglichen Ausführungsform wird beispielsweise als zweiter thermischer Reaktor ein in Form und Abmessung im Wesentlichen mit dem ersten thermischen Reaktor übereinstimmender oder zu diesem verschiedener thermischer Reaktor verwendet. So wird beispielsweise ein zweiter thermischer Reaktor verwendet, der gegenüber dem ersten thermischen Reaktor ein größeres Reaktorvolumen und/oder einen größeren Querschnitt aufweist. Dies ermöglicht eine homogene und die Prozesstemperatur weiter reduzierende Verteilung des Heißgasstromes im zweiten Reaktor. Je nach Vorgabe kann als zweiter thermischer Reaktor ein Pulsationsreaktor, ein Wirbelschichtreaktor oder ein anderer geeigneter Reaktor vorgesehen sein. Die Kombination aus Pulsationsreaktor und Wirbelschichtreaktor ermöglicht dabei eine weitgehend lange Verweildauer der Reaktionsstoffe im Reaktionsraum im Minutenbereich.

Bedingt durch die gewählte Kombination von verschiedenen Reaktoren bzw. Reaktorabmessungen in Verbindung mit der gewählten Prozessführung kann zumindest der zweite thermische Reaktor als Reaktionsraum, als Trocknungsraum, als Kalzinationsraum und/oder als Kristallisationsraum dienen. Hierdurch erschließen sich für die eingebrachte Rohstoffmischung verschiedene Behandlungsmöglichkeiten:
- Trocknungsprozesse bei niedrigen Prozesstemperaturen von kleiner 500 °C: Dabei verursacht die instationäre Strömung mit dem hohen Turbolenzgrad mechanische, auf Strömungsgrenzschichten und auf in der Strömung transportierte Materialpartikel wirkende Scherkräfte. Hierdurch werden die aus der Feuchtigkeit resultierenden Adhäsionskräfte im zu behandelten Gut aufgehoben. Der hohe Turbolenzgrad in der möglichen Vorrichtung mit gekoppelten Reaktoren bewirkt zumindest eine teilweise Ablösung der Grenzschicht am Trocknungsgut, zumindest wird aber das Bilden einer Temperaturhülle um die zu trocknenden Partikel unterbunden, mit der Folge, dass der Stoff- und Wärmetransport und somit der Trocknungsprozess intensiviert wird.
- Kristallisations-, Stoffwandlungs- und Kalzinationsprozesse bei Prozesstemperaturen von kleiner 750 °C: Dabei wirken auch hier, in Abhängigkeit von der Geometrie des zweiten Reaktors, besondere Wärmeübergangsbedingungen aufgrund des pulsierenden Heißgasstromes und des resultierenden hohen Turbulenzgrads.
- Kristallisations-, Stoffwandlungs- und Kalzinationsprozesse bei Prozesstemperaturen von größer oder gleich 750 °C. Hier wirken vergleichbare Reaktionsbedingungen zur bestehenden Pulsationsreaktortechnologie, jedoch mit der Möglichkeit einer verlängerten Verweilzeit und der stabileren Prozessführung durch die Verbesserte Brennstoffzuführung.

Die unterschiedlichen Behandlungsmöglichkeiten erfordern die spezielle Anpassung der Geometrie des zweiten Reaktors an die notwendigen Prozessbedingungen sowie die Auswahl der Art der zur Kopplung vorgesehenen thermischen Reaktoren. Die gekoppelten thermischen Reaktoren zur Trocknung und/oder Stoffbehandlung können entsprechend der Funktion und dem gewünschten Behandlungsverfahren mit verschiedenen technischen Daten betrieben werden. Ein Beispiel dafür zeigt die folgende Übersicht für ein Reaktorsystem, welches speziell für Trocknungsprozess geeignet ist:

| | | |
|---|---|---|
| Erster Reaktor (= Pulsationsreaktor) : | Temperatur : | 750 °C bis 1400 °C |
| | Verbrennungsluft: | 50 Nm³/h bis 200 Nm³/h |
| | | |
| Zweiter Reaktor (= Reaktionsraum) : | Temperatur: | 100 °C bis 800 °C |
| | Volumenstrom: | bis 900 m³/h |
| | Materialmenge: | max. 50 kg/h |

Aus der Vielzahl der möglichen Behandlungsvariationen resultieren zwei bevorzugte Ausführungsformen für den die Kopplung zweier Reaktoren:
1. Der erste als Pulsationsreaktor ausgebildete thermische Reaktor erzeugt das pulsierende Heißgas mit der oben dargestellten erfindungsgemäßen Trennung der Zuführung von Verbrennungsluft und Brennstoff in die Brennkammer. Der mittels des Pulsationsreaktors erzeugte, pulsierende Heißgasstrom wird anschließend in die Brennkammer eines zweiten, an den ersten Reaktor gekoppelten Pulsationsreaktors geleitet. Der zweite Pulsationsreaktor fungiert dabei als Applikationsraum. Die Größe der beiden Pulsationsreaktoren kann dabei identisch oder unterschiedlich sein. Zumindest eine Zweitfeuerung kann in der Brennkammer des zweiten Pulsationsreaktors erfolgen, als weitere Zuführungspunkte eignen sich auch das Resonanzrohr des ersten und/oder des zweiten Pulsationsreaktors. Die Rohstoffmischung kann dem ersten und/oder dem zweiten Pulsationsreaktor mit der Funktion des Applikationsraums in der Brennkammer oder im Resonanzrohr zugeführt werden. Durch die Wahl des Zuführungsortes wird die Verweilzeit der Partikel der thermische Behandlungsprozess verändert. Hierdurch kann beispielsweise die resultierende mittlere Partikelgröße, die Partikelgrößenverteilung, die spezifische Oberfläche und der Reaktionsfortschritt bei der Phasenbildung beeinflusst werden. Damit stellt die Wahl des Zuführungsortes eine wichtige Steuerungsgröße des thermischen Prozesses am Pulsationsreaktor und somit zur Einstellung der Eigenschaften der Partikel dar.
2. Ein erster als Pulsationsreaktor ausgebildeter Reaktor erzeugt das pulsierende Heißgas mit der oben dargestellten erfindungsgemäßen Trennung der Zuführung von Verbrennungsluft und Brennstoff in die Brennkammer für die Trocknung. Der mittels des Pulsationsreaktors erzeugte, pulsierende Heißgasstrom wird anschließend in einen zweiten Reaktor mit Trocknungsraum (Applikator) geleitet. Zumindest eine Kühlung mittels Kühlgas und/oder Kühlflüssigkeit kann zwischen den beiden Reaktoren erfolgen, beispielsweise am Ende des Resonanzrohres des ersten Pulsationsreaktors durch Zuführung von Kühlluft. Aber auch andere bzw. weitere Zuführungspunkte für das Kühlgas und/oder Kühlflüssigkeit eignen sich in Abhängigkeit des gewünschten Behandlungsregimes. Der zweite Reaktor besitzt beispielsweise die Form eines Kegels, aber auch andere Formen sind ohne weiteres geeignet. Im unteren Teil des Kegels tritt der Trocknungsmittelstrom über das Einströmrohr ein. Er durchströmt den sich nach oben erweiternden Kegel von unten nach oben und verlässt den Applikator oben über das Ausströmrohr. In diesem Applikator wird das Produkt durch den pulsierenden Gasstrom aufgewirbelt. Auf Grund der konischen Erweiterung des Applikators verringert sich die Gasgeschwindigkeit nach oben immer weiter, so dass das aufgewirbelte Gut in einer bestimmten Höhe auf die Kegelwand fällt und dort wieder nach unten gleitet wird, um am Eintrittsrohr für den Gasstrom erneut aufgewirbelt zu werden. Kleine Produktteile werden mit dem Gasstrom aus dem Applikator ausgetragen.

Darüber hinaus sind weitere Kombinationen und Kopplungen geeigneter Reaktoren in Verbindung mit einem Pulsationsreaktor mit der oben dargestellten erfindungsgemäßen Trennung der Zuführung von Verbrennungsluft und Brennstoff in die Brennkammer für entsprechende Prozesse möglich.

Die Materialzuführung oder -aufgabe des Produktes und im zweiten Anwendungsfall des zu trocknenden Produktes ist an verschiedenen Orten und in verschiedener Art möglich. So kann zumindest eine Rohstoffmischung zur Bildung der Partikel im ersten thermischen Reaktor und/oder zweiten thermischen Reaktor und/oder in einem dem jeweiligen thermischen Reaktor nachgeschalteten Resonanzrohr eingebracht werden. Dabei kann die Rohstoffmischung in Form von festen Rohstoffen, als Rohstofflösung, Rohstoffsuspension, Rohstoffdispersion oder Rohstoffemulsion eingebracht, beispielsweise gesprüht oder zerstäubt werden. Zudem können die Rohstoffe oder Rohstoffmischungen in gasförmiger Form in den Ofen eingeleitet werden. Dazu werden die Rohstoffe bzw. Rohstoffmischung zunächst außerhalb des beschriebenen thermischen Reaktors in die Gasphase überführt, z. B. durch einen Verdampfer und dem Reaktor zugeführt. Es besteht dabei auch die Kombination verschiedener Zuführungsformen. Die Wahl des Aufgabeortes beeinflusst die nachfolgende thermische Behandlung, stellt somit eine bedeutende Steuergröße für die thermische Behandlung dar.

Im Falle einer Lösung, Suspension, Dispersion oder Emulsion als Rohstoffmischung erfolgt die Produktaufgabe vorteilhafter Weise mittels einer Düse, beispielsweise durch eine Zweistoffdüse oder Hochdruckeinspritzdüse. Die Art der Düse beeinflusst die Töpfchenausbildung und somit die resultierende Partikelform bzw. Partikelgrößenverteilung. Die Einsprührichtung bezüglich des pulsierenden Heißgasstroms kann zum Beispiel Prozessparameter, wie Verweilzeit und Turbulenzgrad, beeinflussen. Ebenfalls wird das Sprühbild, insbesondere die Tröpfchengrößenverteilung beeinflusst. Damit stellt die Wahl der Einsprührichtung eine bedeutende Steuergröße für die Verweilzeit, Turbolenzgrad und Partikelgrößenverteilung dar. In einer bevorzugten Ausführungsform wird die Einsprührichtung in Bewegungsrichtung des Heißgasstromes gewählt. Damit wird der pulsierende Heißgasstrom am geringsten beeinflusst. In einer anderen bevorzugten Ausführungsform wird die Rohstoffmischung durch die Düse von oben gegen die Strömungsrichtung des Mittelstroms des pulsierenden Heißgases in den betreffenden Reaktor, insbesondere dem zweiten Reaktor eingesprüht. Dies eignet sich besonders für Trocknungsprozesse, beispielsweise im Falle eines gekoppelten Wirbelschichtreaktors als zweiten Reaktor. Durch die Veränderung der Einstecktiefe der Düsenlanze kann dabei die Verweilzeit variiert werden. In diesem Fall besteht auch die Möglichkeit, durch die Wirbelung von kugelförmigen festen Teilchen (Inertkörper) die Suspension auf die Oberfläche dieser Körper aufzusprühen und damit im Wirbelbett so lange zu fixieren bis der Trocknungsvorgang abgelaufen ist. Das dann auf der Körperoberfläche befindliche Trockengut wird durch die mechanische Beanspruchung der Teilchen infolge ihrer Wirbelbewegung abgerieben und als Pulver mit dem Gasstrom aus dem zweiten Reaktor ausgetragen.

Im Falle eines Feststoffes oder Gels als Rohstoff oder Rohstoffmischung wird das Material bevorzugt über ein Fallrohr von oben in den zweiten Reaktor transportiert. Beispielsweise werden der Feststoff und/oder das Gel entgegen der Strömungsrichtung des Fluidstroms aufgegeben. Durch die Länge des Fallrohres kann der Aufgabeort und somit die Verweilzeit des Feststoffes variiert werden.

Zusammenfassend kann die aus Rohstoffkomponenten gebildete Rohstoffmischung sowohl als Feststoff, beispielsweise in Form eines feinteiligen Pulvers als auch in Form einer Rohstofflösung oder einer Rohstoffsuspension oder einer Rohstoffdispersion oder eines Gels in den Heißgasstrom eingebracht werden. Die genannten Formen eignen sich zum Einsprühen bzw. zur Aufgabe in den Applikationsraum. In vorteilhafter Weise kann die Beeinflussung der Partikelgröße neben der Variation von Prozessparametern am gekoppelten thermischen Reaktor so auch über die Wahl der Art der Materialaufgabe beeinflusst werden.

Eine weitere Möglichkeit, die resultierenden Partikeleigenschaften wie beispielsweise Partikelgröße oder Partikelform sowie die Prozessparameter einzustellen, besteht in der Konditionierung der Rohstoffmischung. Feste Rohstoffmischungen können beispielsweise homogenisiert und gegebenenfalls fein gemahlen werden. Zur Herstellung von Rohstoffmischungen in Form von Lösungen, Suspensionen und/oder Dispersionen werden gegebenenfalls Hilfsstoffe gemischt oder ungemischt zugeführt. Zur Bildung einer Lösung kann beispielsweise ein Lösungsmittel als Hilfsstoff hinzugefügt werden, in dem die beispielsweise feste Basiskomponente gelöst wird. Das Lösungsmittel kann auch dem Suspendieren oder Dispergieren der Rohstoffmischung dienen.

Weiterhin kann eine organische und/oder anorganische kalorische Komponente als Hilfsstoff zugegeben werden. Damit ist eine Komponente gemeint, die in einem thermischen Prozess zusätzlich kalorische Energie innerhalb des sich bildenden Partikels und/oder im Bereich zwischen den Partikeln freisetzt. Darüber kann auch die Reaktionsatmosphäre, zum Beispiel die Zusammensetzung des Heißgasstromes gezielt beeinflusst werden.

Des Weiteren können Tenside und/oder Emulgatoren als Hilfsstoffe zugegeben werden, um die Tröpfchengröße der dispersen Phase in der Suspension oder Dispersion einzustellen und so mittelbar die Größe der sich bildenden Partikel zu beeinflussen. Die Zugabe von einem oder mehreren Tensiden und/oder Emulgatoren, z. B. in Form eines Fettalkoholethoxylates in einer Menge von 1 Masse-% bis 10 Masse-%, vorzugsweise 3 Masse-% bis 6 Masse-% bezogen auf die Gesamtmenge der Rohstoffmischung, bewirkt die Ausbildung feinerer Partikel mit besonders ebenmäßiger Kugelform. Auch kann der Rohstoffmischung als Hilfskomponente mindestens ein Hilfsstoff zur Stabilisierung der Rohstoffdispersion oder Rohstoffsuspension oder Rohstoffemulsion zugegeben werden.

Eine besonders enge und definierte Kornverteilung der Partikel kann beispielsweise durch einen ein- oder mehrstufigen nasschemischen Zwischenschritt vor der thermischen Behandlung im thermischen Reaktor erfolgen. Dazu kann über die Art und Weise und die Prozessführung des nasschemischen Zwischenschritts, beispielsweise über eine Cofällung, die Partikelgröße zunächst in der Rohstoffmischung eingestellt werden. Für den nasschemischen Zwischenschritt einer wässrigen und/oder alkoholischen Rohstoffmischung können bekannte Methoden wie beispielsweise Cofällung, Hydroxidfällung angewandt werden.

Für eine kosteneffiziente Prozessgestaltung wird der Einsatz von wässrigen Rohstofflösungen bevorzugt, welche die entsprechenden Rohstoffkomponenten im erforderlichen stöchiometrischen Verhältnis enthalten. Besonders bevorzugt wird der Einsatz von Mischnitratlösungen. Zur Herstellung von besonders feinen Partikeln eignet sich besonders der Einsatz von metallorganischen Verbindungen in Kombination mit einem oder mehreren organischen Lösungsmitteln.

Eine weitere Möglichkeit zur Einstellung der Partikelgröße ist die Herstellung einer definierten Rohstoffdispersion, Rohstoffsuspension oder Rohstoffemulsion aus der Rohstoffmischung in Kombination mit mindestens einer mit der Rohstoffmischung nicht mischbaren Komponente. Unter einer Dispersion soll ein Gemenge aus mindestens zwei Stoffen verstanden werden, die nicht oder kaum miteinander mischbar sind. Einer der Stoffe (disperse Phase) wird dabei möglichst fein in einem anderen der Stoffe (Dispergens) verteilt. Eine Suspension ist eine Dispersion bei der die disperse Phase ein Feststoff und das Dispergens eine Flüssigkeit ist. Unter einer Emulsion wird ein fein verteiltes Gemenge zweier verschiedener (normalerweise nicht miteinander mischbarer) Flüssigkeiten ohne sichtbare Entmischung verstanden. Die so genannte innere Phase (disperse Phase) liegt dabei in kleinen Tröpfchen verteilt in der so genannten äußeren Phase (kontinuierliche Phase, Dispersionsmittel, Dispergens) vor. Emulsionen gehören somit zu den dispersen Systemen, sind also ein Spezialfall einer Dispersion. Ein weiterer Bestandteil aller Emulsionen ist ein Emulgator, der die Energie der Phasengrenze senkt und so einer Entmischung entgegenwirkt. Zur Stabilisierung nicht mischbarer Flüssigkeiten können grenzflächenaktive Substanzen, wie Emulgatoren, Tenside, hinzugegeben werden. Sie verhindern, dass sich das Gemenge wieder in seine Bestandteile trennt. Das Einbringen von derartigen Substanzen, wie Emulgatoren, Tenside, zusätzliche organische Komponenten wie Petrolether, die brennbar sind, in den zweiten thermischen Reaktor kann durch Reduzierung der Temperatur im zugeführten pulsierenden Heißgas entsprechend kompensiert werden.

Nach der Bildung der Partikel kann eine ein- oder mehrstufige In-Situ-Beschichtung der Partikel erfolgen. Dabei ist bei einer geeigneten Wahl des Prozessablaufes sowohl eine rein anorganische Beschichtung als auch eine organische Beschichtung bzw. eine Kombination aus beiden möglich. Die Flexibilität in der pulsierenden Heißgaserzeugung und der Gestaltung des Reaktionsraumes bieten umfangreiche Einstellmöglichkeiten der Prozessparameter und somit die Möglichkeit unterschiedliche Beschichtungsformen, beispielsweise Schichtdicke oder Modifikation der Beschichtung, zu realisieren. Durch die Prozesssteuerung, beispielsweise durch die Prozesstemperatur am Zuführungspunkt, der Verweilzeit und/oder der Wahl der Edukte, kann die gewünschte Beschichtungsform realisiert werden. Beispielsweise erfolgt die Beschichtung mit organischen Substanzen deutlich homogener und technologisch einfacher durch die Möglichkeit der Verweilzeitverlängerung sowie der Möglichkeit der Absenkung der Prozesstemperatur als im bisherigen herkömmlichen Pulsationsreaktor. In einer bevorzugten Ausführungsform können die mit organischen Substanzen beschichteten Partikel > 1 Sekunde bis hin in den Minutenbereich bei Prozesstemperaturen < 300 °C behandelt werden, wobei sich die organischen Substanzen besonders gut mit den Partikeln verbinden und überschüssige Hilfsstoffe, zum Beispiel Lösungsmittel, abgetrennt werden.

Die im thermischen Reaktor erzeugten feinteiligen Partikel werden mit einer geeigneten Abscheideinrichtung, wie beispielsweise einem Gaszyklon, einem Oberflächen- oder einem Elektrofilter, von dem Heißgasstrom abgetrennt.

Das Heißgas wird vor seinem Eintritt in die Abscheideinrichtung auf die je nach dem Typ der Abscheideinrichtung erforderliche Temperatur abgekühlt. Dies erfolgt zum Beispiel durch einen Wärmetauscher und/oder durch Einleiten von Kühlgasen in den Heißgasstrom.

Die Partikel können einer zusätzlichen einstufigen oder mehrstufigen thermischen Nachbehandlung unterzogen werden, um durch die nachträgliche thermische Behandlung die Oberfläche der Partikel zumindest teilweise zu modifizieren und/oder gegebenenfalls verbliebene flüchtige Komponenten (zum Beispiel Carbonate, Nitrate, etc.) zumindest teilweise zu entfernen. Für die thermische Nachbehandlung kommt ein weiterer thermischer Reaktor, insbesondere ein weiterer Reaktor mit pulsierender Verbrennung oder ein Drehrohrofen oder eine Wirbelschichtanlage zum Einsatz.

Die feinteiligen Partikel werden in einer weiteren Ausführungsform vor und/oder während mindestens einer der thermischen Nachbehandlungen zumindest teilweise beschichtet oder imprägniert. Dabei können mögliche Agglomerationen der beschichteten Partikel vorzugsweise durch eine Trockenmahlung zumindest teilweise reduziert werden.

Die feinteiligen Partikel, beschichtet oder unbeschichtet, können im Anschluss in eine Suspension überführt werden, wobei eine Agglomeration der Partikel in der Suspension durch eine zusätzliche Nassmahlung zumindest teilweise reduziert werden und/oder die Suspension getrocknet werden kann, beispielsweise zu einem Granulat.

Ausführungsbeispiele der Erfindung werden im Folgenden anhand einer Zeichnung näher erläutert.

Es zeigen:
- Figur 1: schematisch einen thermischen Reaktor mit einer von der Verbrennungsluft separaten Brennstoffzufuhr,
- Figur 2: schematisch eine Vorrichtung mit einem als Pulsationsreaktor ausgebildeten thermischen Reaktor zur Erzeugung des Heißgasstroms, der mit einem weiteren Pulsationsreaktor als Applikationsraum gekoppelt ist, und
- Figur 3: schematisch eine alternative Vorrichtung mit einem als Pulsationsreaktor ausgebildeten thermischen Reaktor zur Erzeugung des Heißgasstroms, der mit einer Wirbelschicht als Applikationsraum gekoppelt ist.

Einander entsprechende Teile sind in allen Figuren mit den gleichen Bezugszeichen versehen.

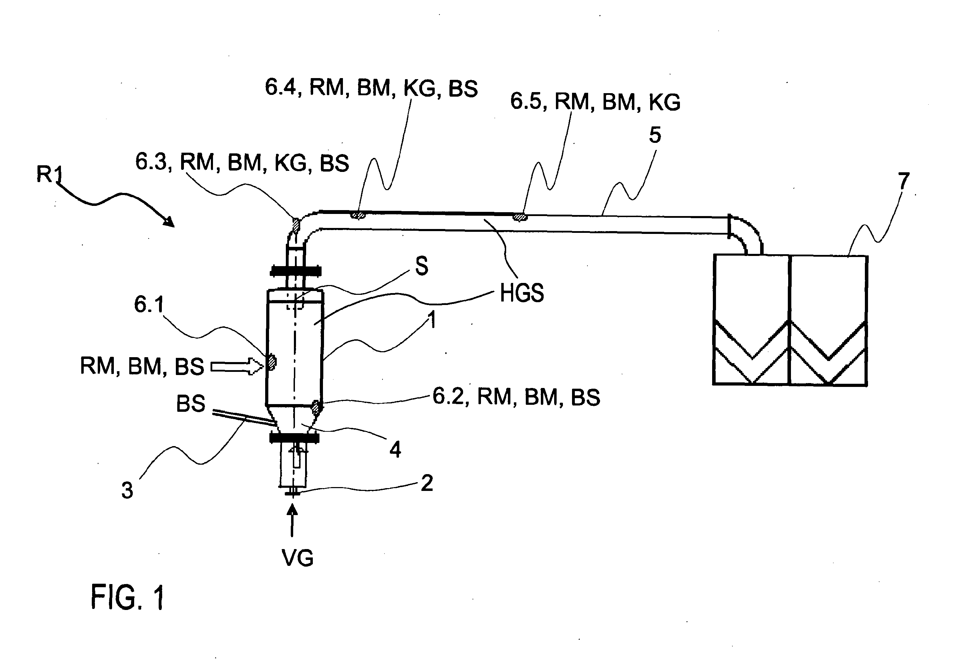

**Figur 1** zeigt einen thermischen Reaktor R1 zur Herstellung von feinteiligen Partikeln P mit einer mittleren Partikelgröße von 10 nm bis 100 µm. Der thermische Reaktor R1 ist beispielhaft als ein Pulsationsreaktor ausgebildet, in welchem in einem pulsierenden Heißgasstrom HGS die Partikel P gebildet werden. Hierzu umfasst der thermische Reaktor R1 eine Brennkammer 1 zur Erzeugung des pulsierenden Heißgasstrom HGS. Dabei werden gegenüber herkömmlichen Pulsationsreaktoren Verbrennungsgase VG über Ventile 2 pulsierend und Brennstoff BS davon separat und kontinuierlich über eine Zuführung 3 in die Brennkammer 1 eingebracht. Die Zuführung 3 kann dabei in einen Boden 4 der Brennkammer 1 oder oberhalb des Bodens 4 in die Brennkammer 1 münden. Vorzugsweise mündet die Zuführung 3 in einen öffnenden Konus im Boden 4 der Brennkammer 1. Die Zuführung 3 kann darüber hinaus mehrere Austrittsöffnungen zum Einsprühen des Brennstoffs BS aufweisen. Als Brennstoff BS wird der Brennkammer 1 insbesondere ein brennbares Gas, z. B. Wasserstoff, zugeführt. Auch kann ein anderes geeignetes Gas als Brenngas zugeführt werden. Der Boden 4 ist mit mehreren Ventilen 2 zum Eintritt der Verbrennungsgase VG, z. B. Umgebungsluft, Sauerstoff, etc. versehen. Die getrennt voneinander der Brennkammer 1 zugeführten Verbrennungsgase VG und Brennstoffe BS werden in der Brennkammer 1 gezündet. Sie verbrennen sehr schnell und erzeugen eine Druckwelle in Richtung eines strömungsausgangsseitig an die Brennkammer 1 angeordneten Resonanzrohres 5, da der Gaseintritt durch die aerodynamischen Ventile 2 bei Überdruck weitgehend verschlossen wird. Durch den infolge der Verbrennung in das Resonanzrohr 5 ausströmenden Heißgasstrom HGS wird ein Unterdruck in der Brennkammer 1 erzeugt, so dass durch die Ventile 2 neue Verbrennungsgase VG oder Brennstoff BS nachströmt und selbst zündet. Dieser Vorgang des Schließens und Öffnens der Ventile 5 durch Druck und Unterdruck erfolgt selbstregelnd periodisch. In die Brennkammer 1 oberhalb des Bodens 4 und/oder an geeigneter Stelle in das Resonanzrohr 5 wird an verschiedenen Zuführungspunkten 6.1 bis 6.n eine Rohstoffmischung RM eingeführt. Darüber hinaus können an entsprechenden Zuführungspunkten 6.1 bis 6.n ein weiterer Brennstoff BS, Beschichtungsmischungen BM oder Hilfsstoffe in den Heißgasstrom HGS eingeführt werden. In dem Heißgasstrom HGS erfolgt die Partikelbildung. Der erzeugte Heißgasstrom HGS weist vorzugsweise eine Verbrennungsfrequenz von 5 Hz bis 150 Hz auf. Die Temperatur beträgt mindestens 750 °C bis 1400 °C. Durch die Wahl des Zuführungspunktes 6.1 bis 6.n ist sowohl eine Reaktionstemperatur, die im Verlauf des Heißgasstroms HGS einem bestimmten Profil folgt, als auch die Reifenfolge der Reaktionen zur Partikelbildung und/oder Beschichtung bei aufeinander folgenden Verfahrensschritten in einer Vorrichtung beeinflussbar. Die Zuführungspunkte 6.1 bis 6.n sind beispielsweise als Düsen ausgebildet. Die im Heißgasstrom HGS gebildeten feinteiligen Partikel P gelangen anschließend in eine Abscheideinrichtung 7, die sich an das Resonanzrohr 5 anschließt. In der Abscheideinrichtung 7 erfolgt die Pulverabscheidung, indem die gebildeten Partikel P vom Heißgasstrom HGS abgetrennt werden.

In einer weiteren vorteilhaften Ausführungsform kann der thermische Reaktor R1 ausgangsseitig im Bereich eines sich schließenden Konus der Brennkammer 1 zumindest mit einem Strömungselement S versehen sein. Dies unterstützt eine Verwirbelung des pulsierenden Heißgasstroms HGS, wodurch eine bessere Durchmischung der Rohstoffe bzw. Rohstoffmischungen RM ermöglicht ist. In einer besonders einfachen Ausführungsform ragt hierzu das Resonanzrohr 2 zumindest teilweise in den schließenden Konus hinein.

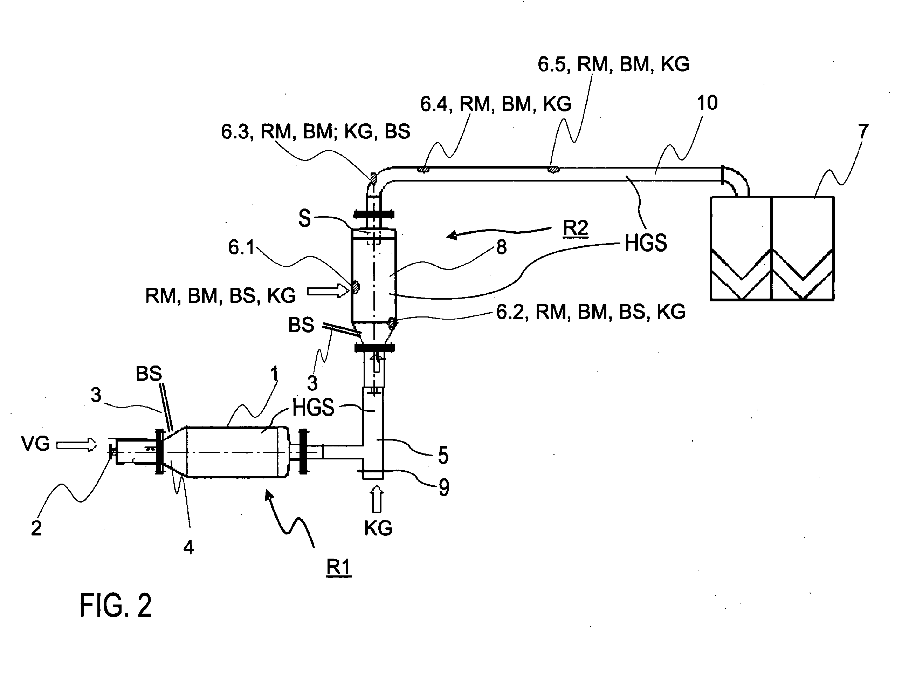

**Figur 2** zeigt eine Vorrichtung 1 aus zwei miteinander gekoppelten thermischen Reaktoren R1 und R2. Beide thermische Reaktoren R1 und R2 sind Pulsationsreaktoren, wobei der erste Pulsationsreaktor R1 einen pulsierenden Heißgasstrom HGS erzeugt und die Brennkammer 8 des zweiten Pulsationsreaktors R2 als Applikationsraum dient.

Der erste Pulsationsreaktor R1 umfasst wie oben beschrieben die Brennkammer 1, an die ein als Verbindungsrohr zum zweiten Pulsationsreaktor R2 dienendes Resonanzrohr 5 angeschlossen ist. Das Resonanzrohr 5 weist einen gegenüber der Brennkammer 1 deutlich verminderten Strömungsquerschnitt auf. Analog zum thermischen Reaktor R1 gemäß Figur 1 erfolgt eine separate Zufuhr von Verbrennungsgasen VG und Brennstoffen BS. Das als Verbindungsrohr dienende Resonanzrohr 5 weist eine Möglichkeit zur Regelung der Zuführung des Kühlmediums KG, z. B. einen regelbaren Stutzen 9, auf. Durch Variation des Verhältnisses zwischen pulsierenden Heißgasstrom HGS und Kühlmedium KG, z. B. Luft, wird die Temperatur im zweiten Pulsationsreaktor R2 (Applikationsraum) eingestellt.

Der zweite Pulsationsreaktor R2 (Applikationsraum) weist eine Brennkammer 8 und ein an diese angeschlossenes Resonanzrohr 10 auf. Im Bereich der Brennkammer 8 und des Resonanzrohres 10 weist der zweite Pulsationsreaktor R2 eine Reihe von Zuführungspunkten 6.1 bis 6.5 für die Zuführung von Edukten wie Rohstoffmischungen RM, Beschichtungsmischungen BM, weiteren Brennstoffen BS, Hilfsstoffen etc. in den Heißgasstrom HGS auf. Durch die Wahl des Zuführungspunktes 6.1 bis 6.5 ist sowohl eine Reaktionstemperatur, die im Verlauf des Heißgasstromes HGS einem bestimmten Profil folgt, als auch die Reihenfolge der Reaktionen bei aufeinander folgenden Verfahrensschritten beeinflussbar. Die Zuführungspunkte 6.1 bis 6.5 können beispielsweise als Düsen ausgebildet sein.

Die im zweiten Pulsationsreaktor R2 gebildeten feinteiligen Partikel P gelangen anschließend in eine Abscheideinrichtung 7 zur Pulverabscheidung.

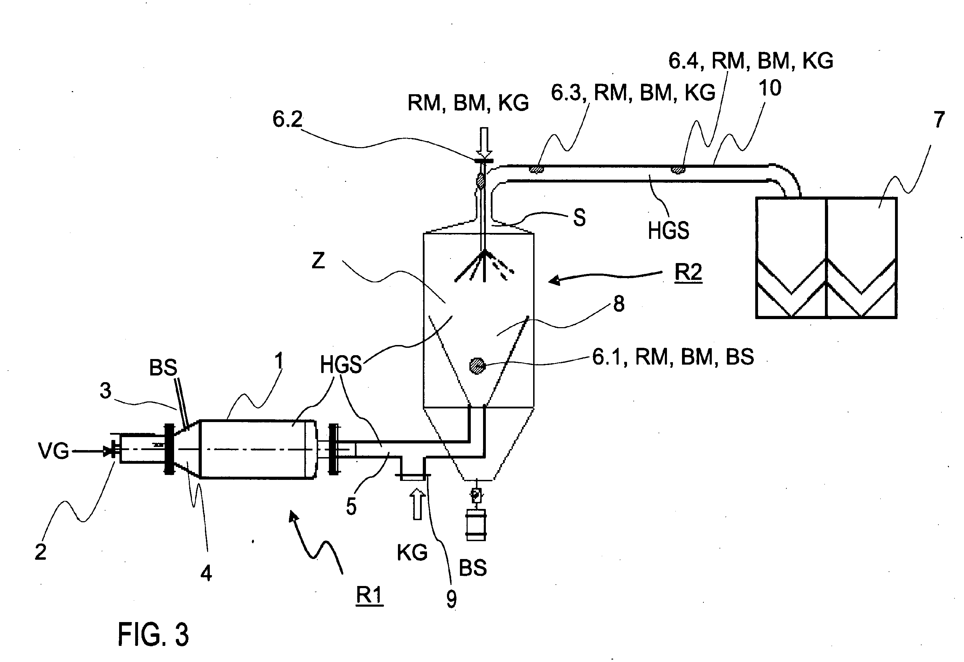

**Figur 3** zeigt eine weitere alternative Ausführungsform für eine Vorrichtung mit mehreren gekoppelten thermischen Reaktor R1 und R2. Dabei ist der erste thermische Reaktor R1 ein Pulsationsreaktor, der das pulsierende Heißgas erzeugt und der zweite Reaktor R2 ist beispielsweise ein Wirbelschichtreaktor oder ein Zylinder Z mit strömungseingangsseitig öffnendem Konus K1 und strömungsausgangsseitig schließendem Konus K2 als Applikationsraum.

Der pulsierende Heißgasstrom HGS wird in dem als Pulsationsreaktor ausgebildeten ersten thermischen Reaktor R1 analog der Beschreibung für Figur 1 erzeugt.

Das Resonanzrohr 5 des ersten thermischen Reaktors R1 stellt die Verbindung zwischen der Brennkammer 1 und der Brennkammer 8 des zweiten Reaktors R2 mit Wirbelschichtzone dar. Das Resonanzrohr 5 weist eine Möglichkeit zur Regelung der Zuführung des Kühlmediums KG, z.B. einen regelbaren Stutzen 9, auf. Durch Variation des Verhältnisses zwischen pulsierendem Heißgasstrom HGS und Kühlmedium KG wird die Temperatur in der Wirbelschicht der Brennkammer 8 des zweiten Reaktors R2 eingestellt. An die Brennkammer 8 des zweiten Reaktors R2 schließt sich das Resonanzrohr 10 an. Im Bereich der Brennkammer 8 und des Resonanzrohres 10 weist die Wirbelschichtanlage eine Reihe von Zuführungspunkten 6.1 bis 6.4 für die Zuführung von Edukten wie Rohstoffmischungen RM, Beschichtungsmischungen BM, weiteren Brennstoffen BS, Hilfsstoffen etc. in den Heißgasstrom HGS auf. Durch die Wahl des Zuführungspunktes 6.1 bis 6.4 ist sowohl eine Reaktionstemperatur, die im Verlauf des Heißgasstromes HGS einem bestimmten Profil folgt, als auch die Reihenfolge der Reaktionen bei aufeinander folgenden Verfahrensschritten beeinflussbar. Die Zuführungspunkte 6.1 bis 6.4 können beispielsweise als Düsen ausgebildet sein. Hier erfolgt die Zuführung einer flüssigen Rohstoffmischung über eine Zweistoffdüse. Bei dieser Düsenart wird die Rohstoffmischung RM mit Hilfe eines Luftstromes fein verdüst. Die im zweiten Reaktor R2 gebildeten feinteiligen Partikel P gelangen anschließend in eine Abscheideinrichtung 7 zur Pulverabscheidung.

Die folgenden Beispiele sollen die vorliegende Erfindung verdeutlichen. Sie sind jedoch keinesfalls als limitierend zu betrachten. Alle Verbindungen oder Komponenten, die in den Zubereitungen verwendet werden können, sind entweder bekannt und käuflich erhältlich oder können nach bekannten Methoden synthetisiert werden. Die in den Beispielen angegebenen Temperaturen gelten immer in °C. Es versteht sich weiterhin von selbst, dass sich sowohl in der Beschreibung als auch in den Beispielen die zugegebenen Mengen der Komponenten in den Zusammensetzungen immer zu insgesamt 100% addieren. Gegebene Prozentangaben sind immer im gegebenen Zusammenhang zu sehen. Sie beziehen sich üblicherweise aber immer auf die Masse der angegebenen Teil- oder Gesamtmenge.

### Beispiel 1)

Die Rohstoffkomponente Zinkacetat wird in Wasser als Lösungsmittel unter Erwärmen (50-70°C) gelöst, so dass die resultierende Rohstoffmischung RM in Form einer Rohstofflösung einen Metallgehalt von 18 % Zn aufweist. Diese warme Rohstoffmischung RM wird bei einem Durchsatz von 25 kg/h mit Hilfe einer Schlauchpumpe in den Zuführungspunkt 6.2 des in Figur 1 gezeigten Pulsationsreaktors R1 oder in den Zuführungspunkt 6.2 des in Figur 2 gezeigten Pulsationsreaktors R2 gepumpt und dort über eine 1,8 mm Titandüse in den Heißgasstrom HGS fein eingestäubt und thermisch behandelt.

### Reaktor-Parameter:

- Temperatur in der Brennkammer 1: 720°C
- Temperatur im Resonanzrohr 5 bzw. 10: 700°C

Vor Eintritt in die Abscheideinrichtung 7 wird der die gebildeten Partikel P enthaltende Heißgasstrom HGS durch Zufuhr von Kühlluft KL am Kühlluftzuführungspunkt 6.3 auf ca. 160 °C abgekühlt. Als Abscheideinrichtung 7 zum Abtrennen der feinteiligen Partikel P aus dem Heißgasstrom HGS wird ein Kassettenfilter verwendet.

Die ZnO-Partikel P weisen eine Korngröße von d50= 35 nm, eine kugelförmige Partikelform und eine spezifische Oberfläche (BET) von 38 m²/g auf.

### Beispiel 2)

Die Rohstoffkomponente Tetraisopropylorthotitanat wird in getrocknetem Isopropanol gelöst, so dass die Rohstoffmischung RM in Form einer Rohstofflösung einen Metallgehalt von 10 % Titan aufweist. Die Rohstoffmischung RM wird bei einem Durchsatz von 10 kg/h mit Hilfe einer Schlauchpumpe in den Zuführungspunkt 6.2 des in Figur 1 gezeigten Pulsationsreaktors R1 oder in den Zuführungspunkt 6.2 des in Figur 2 gezeigten Pulsationsreaktors R2 gepumpt und dort über eine 1,8 mm Titandüse in den Heißgasstrom HGS fein eingestäubt und thermisch behandelt. Der Heißgasstrom HGS wird durch Zugabe von Kühlluft KL am Kühlluftzuführungspunkt 6.3 oder 6.4 im vorderen bzw. mittleren Teil des Resonanzrohres 5 bzw. 10 derart gekühlt, dass die Temperatur am Zuführungspunkt 6.5 bei 140 °C liegt.

### Reaktor-Parameter:

- Temperatur in der Brennkammer 1: 700°C

Als Abscheideinrichtung 7 zum Abtrennen der feinteiligen Partikel P aus dem Heißgasstrom HGS wird ein Kassettenfilter verwendet. Die TiO₂-Partikel P weisen eine Korngröße von d50= 30 nm, eine kugelförmige Partikelform und eine spezifische Oberfläche (BET) von 37 m²/g auf.

### Beispiel 3)

Flüssiges Titantetrachlorid wird bei 140°C und mittels eines Wasserstoffstromes mindestens über die Zuführungspunkte 6.1 und/oder 6.2 des in Figur 1 gezeigten Pulsationsreaktors R1 oder mindestens über die Materialzuführungspunkte 6.1 1 und/oder 6.2 des in Figur 2 gezeigten Pulsationsreaktors R2 eingeführt. Die Materialaufgabemenge entspricht dabei bezogen auf das flüssige Titantetrachlorid 5 kg/h.

### Reaktor-Parameter:

- Temperatur in der Brennkammer 1 bzw. 8: 1100°C
- Temperatur im Resonanzrohr 5 bzw. 10: 1050°C

Vor Eintritt in die Abscheideinrichtung 7 wird der die Partikel P enthaltende Heißgasstrom HGS durch Zufuhr von Kühlluft KL zumindest am Kühlluftzuführungspunkt 6.3 und/oder 6.4, 6.5 auf ca. 160 °C abgekühlt. Als Abscheideinrichtung 7 zum Abtrennen der feinteiligen Partikel P aus dem Heißgasstrom HGS wird ein Kassettenfilter verwendet.

Die mittlere Partikelgröße des hergestellten TiO₂-Pulvers beträgt d₅₀ = 40 nm. Die Partikelform ist späherisch. Partikel P mit Hohlkugelstruktur konnten nicht nachgewiesen werden. Das hergestellte Pulver besitzt eine spezifische Oberfläche von 28 m²/g.

### Beispiel 4)

Magnesiumnitrat-Hexahydrat und Aluminiumnitrat-Nonahydrat werden jeweils getrennt in Wasser gelöst, so dass die Lösungen einen Metallgehalt von 6,365% Mg bzw. 4,70% A1 aufweisen. Danach wird durch intensives Rühren eine Mg-Al-Mischnitratlösung hergestellt, welche die Elemente Mg und A1 im molaren Verhältnis 1:2 enthält. Die Lösung wird mit Reinst-Wasser im Verhältnis 1:1 verdünnt. Es erfolgt ein weiterer Zusatz von einem Fettalkoholethoxylat (Lutensol AO3 der BASF AG) in einer Menge von 10% bezogen auf die Masse der gesamten Lösung. Diese Rohstoffmischung RM wird mit einem Durchsatz von 10 kg/h mittels Zweistoffdüse über in den oder die Zuführungspunkte 6.1, 6.2 des in Figur 1 gezeigten Pulsationsreaktors R1 oder den Zuführungspunkten 6.1, 6.2 des in Figur 2 gezeigten Pulsationsreaktors R1 gepumpt und dort über eine 1,8 mm Titandüse in den Heißgasstrom HGS fein eingestäubt und thermisch behandelt. Nachdem der Heißgasstrom HGS mit den neu gebildeten Feststoffpartikeln und den Reaktionsgasen die Brennkammer 1 durchströmt hat, wird er im Resonanzrohr 5 (Reaktor R1 in Figur 1) bzw. 10 (gekoppelte Reaktoren R1 und R2 in Figur 2) über den Zuführungspunkt 6.3 durch Zuführung von weiterem Brennstoff BS in Form von Wasserstoff nochmals erwärmt.

### Reaktor-Parameter:

- Temperatur in der Brennkammer 1 bzw. 8: 750°C
- Temperatur im Resonanzrohr 5 bzw. 10: 1050°C

Vor Eintritt in die Abscheideinrichtung 7 wird der die Partikel P enthaltende Heißgasstrom HGS durch Zufuhr von Kühlluft KL am Kühlluftzuführungspunkt 6.4 bzw. 6.5 auf ca. 160 °C abgekühlt. Als Abscheideinrichtung 7 zum Abtrennen der feinteiligen Partikel P aus dem Heißgasstrom HGS wird ein Kassettenfilter verwendet.

Die mittlere Partikelgröße des hergestellten Spinell-Pulvers beträgt d₅₀ = 120 nm. Die Partikelform ist späherisch. Partikel P mit Hohlkugelstruktur konnten nicht nachgewiesen werden. Das hergestellte Pulver besitzt eine spezifische Oberfläche von 21 m²/g.

### BEZUGSZEICHENLISTE

- 1: erste Brennkammer
- 2: Ventil
- 3: Zuführung
- 4: Boden der Brennkammer
- 5: erstes Resonanzrohr
- 6.1 bis 6.n: Zuführungspunkte
- 7: Abscheidvorrichtung
- 8: zweite Brennkammer als Reaktionsraum
- 9: Stutzen
- 10: zweites Resonanzrohr

- BS: Brennstoff
- BM: Beschichtungsmischung
- HGS: Heißgasstrom
- K1, K2: Konus
- KG: Kühlmedium
- P: Partikel
- R1, R2: thermische Reaktoren
- RM: Rohstoffmischung
- S: Strömungselement
- VG: Verbrennungsgas
- Z: Zylinder

## Patentansprüche

1. Verfahren zur Herstellung feinteiliger Partikel (P), insbesondere mit einer mittleren Korngröße von 10 nm bis 100 µm, in einem pulsierenden Heißgasstrom (HGS), der in einer Brennkammer (1) eines als Pulsationsreaktor ausgebildeten thermischen Reaktors (R1) erzeugt wird, wobei ein Verbrennungsgas (VG) über Ventile (2) pulsierend und gasförmiger Brennstoff (BS) davon separat kontinuierlich sowohl bei geschlossenen als auch bei geöffneten Ventilen (2) und eine Rohstoffmischung (RM) von dem Verbrennungsgas (VG) und dem gasförmigen Brennstoff (BS) separat mit oder ohne kalorischen Komponenten in die Brennkammer (1) oder bezogen auf den Heißgasstrom (HGS) an einem nachfolgenden Ort aufgegeben, die Partikel (P) im pulsierenden Heißgasstrom (HGS) gebildet und die gebildeten Partikel (P) anschließend vom Heißgasstrom (HGS) abgetrennt werden.

2. Verfahren nach Anspruch 1, **dadurch gekennzeichnet, dass** mindestens zwei thermische Reaktoren (R1, R2) miteinander gekoppelt werden, wobei in einem als Pulsationsreaktor ausgebildeten ersten thermischen Reaktor (R1) der pulsierende Heißgasstrom (HGS) erzeugt wird und zumindest in einem als Reaktionsraum, als Trocknungsraum, als Kalzinationsraum und/oder als Kristallisationsraum ausgebildeten zweiten thermischen Reaktor (R2) die Partikel (P) gebildet werden.

3. Verfahren nach Anspruch 1 oder 2, wobei zumindest einer der thermischen Reaktoren (R1) mit einer Verbrennungsfrequenz von 5 Hz bis 150 Hz betrieben wird.

4. Verfahren nach einem der vorhergehenden Ansprüche, wobei der Heißgasstrom (HGS) zumindest zwischen der ersten und der zweiten Verbrennungsstufe durch Einführen eines Kühlmediums (KG), insbesondere von Kühlgas und/oder Kühlflüssigkeit gekühlt wird und/oder dem Heißgasstrom (HGS) nach dem ersten thermischen Reaktor (R1) mindestens ein weiterer Brennstoff (BS) zugeführt wird.

5. Verfahren nach einem der vorhergehenden Ansprüche 1 bis 4, wobei durch die pulsierende Verbrennung im ersten thermischen Reaktor (R1) ein Heißgasstrom (HGS) mit einer Temperatur von größer 750 °C bis 1400 °C erzeugt wird und zumindest bei Einbringen eines Kühlmediums (KG) vor dem zweiten thermischen Reaktor (R2) in diesem eine Temperatur von 100 °C bis 800 °C eingestellt wird.

6. Thermischer Reaktor (R1) zur Herstellung von Partikeln (P), insbesondere mit einer mittleren Partikelgröße von 10 nm bis 100 µm, umfassend
- eine Brennkammer (1) zur Erzeugung eines pulsierenden Heißgasstrom (HGS), wobei ein Verbrennungsgas (VG) über Ventile (2) pulsierend und gasförmiger Brennstoff (BS) davon separat und kontinuierlich zumindest über eine Zuführung (3) sowohl bei geöffneten als auch bei geschlossenen Ventilen (2) und eine Rohstoffmischung (RM) von dem Verbrennungsgas (VG) und dem gasförmigen Brennstoff (BS) separat mit oder ohne kalorische Komponenten an mindestens einem Zuführungspunkt (6.1 bis 6.n) in die Brennkammer (1) oder bezogen auf den Heißgasstrom (HGS) an einem nachfolgenden Ort zuführbar sind,
- ein sich an die Brennkammer (1) anschließendes Resonanzrohr (5), in das sich der erzeugte pulsierende Heißgasstrom (HGS) aus der Brennkammer (1) ausbreitet und
- eine Abscheidevorrichtung (7), in der die gebildeten Partikel (P) vom Heißgasstrom (HGS) abgetrennt werden.

7. Thermischer Reaktor nach Anspruch 6, wobei eingangsseitig in einen öffnenden Konus der Brennkammer (1) die insbesondere mehrere Austrittsöffnungen aufweisende Zuführung (3) für den Brennstoff (BS) angeordnet ist.

8. Thermischer Reaktor nach einem der Ansprüche 6 bis 7, wobei ausgangsseitig ein schließender Konus der Brennkammer (1) zumindest mit einem Strömungselement versehen ist, das insbesondere als ein zumindest teilweise in den schließenden Konus hineinragendes Resonanzrohr (5) ausgebildet ist.

9. Vorrichtung zur Herstellung von Partikeln (P), insbesondere mit einer mittleren Partikelgröße von 10 nm bis 100 µm, umfassend mindestens zwei thermische Reaktoren (R1, R2), wobei die zwei thermischen Reaktoren (R1, R2) miteinander gekoppelt sind und der erste thermische Reaktor (R1) als Pulsationsreaktor zur Erzeugung eines pulsierenden Heißgasstroms (HGS) eine Brennkammer (1) umfasst, der ein Verbrennungsgas (VG) über Ventile (2) pulsierend und gasförmiger Brennstoff (BS) davon separat und kontinuierlich zumindest über eine Zuführung (3) sowohl bei geöffneten als auch bei geschlossenen Ventilen (2) in die Brennkammer (1) zuführbar sind, und sich ein zweiter thermischer Reaktor (R2) an ein Resonanzrohr (5) des ersten thermischen Reaktors (R1) anschließt, wobei dieser zweite thermische Reaktor (R2) als Reaktionsraum, als Trocknungsraum, als Kalzinationsraum und/oder als Kristallisationsraum der Partikelbildung dient, wobei dem ersten und/oder zweiten thermischen Reaktor (R1, R2) eine Rohstoffmischung (RM) von dem Verbrennungsgas (VG) und dem gasförmigen Brennstoff (BS) separat mit oder ohne kalorische Komponenten an mindestens einem Zuführungspunkt (6.1 bis 6.n) in die Brennkammer (1) oder bezogen auf den Heißgasstrom (HGS) an einem nachfolgenden Ort zuführbar ist, und eine Abscheidevorrichtung (7) nach dem zweiten thermischen Reaktor (R2) bezogen auf den Heißgasstrom (HGS) zur Abtrennung der gebildeten Partikel (P) vom Heißgasstrom (HGS) angeordnet ist.

10. Vorrichtung nach Anspruch 9, wobei als zweiter thermischer Reaktor (R2) ein in Form und Abmessung im Wesentlichen mit dem ersten thermischen Reaktor (R1) übereinstimmender thermischer Reaktor vorgesehen ist oder der zweite thermische Reaktor (R2) ein gegenüber dem ersten thermischen Reaktor (R1) größeres Reaktorvolumen und/oder einen größeren Querschnitt aufweist.

11. Vorrichtung nach einem der vorhergehenden Ansprüche 9 bis 10, wobei als zweiter thermischer Reaktor (R2) ein Pulsationsreaktor oder ein Wirbelschichtreaktor vorgesehen ist, der ein gegenüber dem ersten thermischen Reaktor (R1) ein größeres Reaktorvolumen und/oder einen größeren Querschnitt aufweist.

## Claims

1. Procedure for producing fine particles (P), especially with a medium grain size of between 10 nm and 100 µm, in a pulsating hot gas flow (HGS) which is generated in a combustion chamber (1) of a thermal reactor (R1) designed as a pulsation reactor, while a combustion gas (VG) is fed in a pulsating manner through valves (2) and gaseous combustible (BS) is fed continuously and separately from the former both when the valves (2) are closed and when the valves (2) are open and a raw material mixture (RM) is fed separately from the combustion gas (VG) and the gaseous combustible (BS) with or without calorific components into the combustion chamber (1) or, with regard to the hot gas flow (HGS), at a downstream location, the particles (P) are formed in the pulsating hot gas path (HGS) and the particles formed (P) are separated from the hot gas flow (HGS) subsequently.

2. Procedure as claimed in claim 1 **characterized in that** at least two thermal reactors (R1, R2) are coupled to one another where the pulsating hot gas flow (HGS) is generated in a first thermal reactor (R1) designed as a pulsation reactor, and where the particles (P) are formed at least in one second thermal reactor (R2) designed as a reaction chamber, as a drying chamber, as a calcination chamber and/or as a crystallisation chamber.

3. Procedure as claimed in claim 1 or 2 where at least one of the thermal reactors (R1) is operated with a combustion frequency of between 5 Hz and 150 Hz.

4. Procedure as claimed in any preceding claim where the hot gas flow (HGS) is cooled, at least between the first and the second combustion stages, by feeding in a coolant (KG) especially cooling gas and/or cooling liquid and/or at least one further combustible (BS) is added to the hot gas flow (HGS) downstream of the first thermal reactor (R1).

5. Procedure as claimed in any preceding claim 1 through 4 where the pulsating combustion in the first thermal reactor (R1) generates a hot gas flow (HGS) with a temperature of more than 750 °C and up to 1400 °C, and where, at least when feeding a cooling medium (KG) upstream of the second thermal reactor (R2), a temperature of between 100 °C and 800 °C is adjusted in this reactor.

6. Thermal reactor (R1) for the production of particles (P) especially with a medium particle size of between 10 nm and 100 µm, comprising
- a combustion chamber (1) for generating a pulsating hot gas flow (HGS), while a combustion gas (VG) is feedable in a pulsating manner through valves (2), and gaseous combustible (BS) is feedable continuously and separately from the former both when the valves (2) are closed and when they are open and a raw material mixture (RM) is feedable separately from the combustion gas (VG) and the gaseous combustible (BS) with or without calorific components in at least one feeding point (6.1 through 6.n) into the combustion chamber (1) or, with regard to the hot gas flow (HGS), at a downstream location,
- a resonance tube (5) which is contiguous to the combustion chamber (1), and into which the pulsating hot gas flow (HGS) expands out of the combustion chamber (1) and
- a separator (7) in which the particles (P) formed are separated from the hot gas flow (HGS).

7. Thermal reactor as claimed in claim 6 where, on the input side into an opening cone of the combustion chamber (1), the feeder (3) for the combustible (BS) is located which feeder, in particular, comprises several outlet ports.

8. Thermal reactor as claimed in any claim 6 through 7, where, on the output side, a closing cone of the combustion chamber (1) is provided with at least one fluidic device which, in particular, is designed as a resonance tube (5) projecting at least in part into the closing cone.

9. Device for producing particles (P), especially with a medium particle size of between 10 nm and 100 µm, comprising at least two thermal reactors (R1, R2) while the two thermal reactors (R1, R2) are coupled to one another and the first thermal reactor, being a pulsation reactor for generating a pulsating hot gas flow (HGS), comprises a combustion chamber (1) to which a combustion gas (VG) is feedable in a pulsating manner through valves (2) and gaseous combustible (BS) is feedable continuously and separately from the former at least through one feeder (3) into the combustion chamber (1) both when the valves (2) are closed and when the valves (2) are open, and a second thermal reactor (R2) is contiguous to a resonance tube (5) of the first thermal reactor (R1) while this second thermal reactor (R2) serves as a reaction chamber, as a drying chamber, as a calcination chamber and/or as a crystallisation chamber for particle formation, while a raw material mixture (RM) is feedable to the first and/or second thermal reactor (R1, R2) separately from the combustion gas (VG) and the gaseous combustible (BS) with or without calorific components in at least one feeding point (6.1 to 6.n) into the combustion chamber (1) or, with regard to the hot gas flow (HGS), at a downstream location, and a separator (7) is located downstream of the second thermal reactor (R2) with regard to the hot gas flow (HGS) for separating the particles (P) formed from the hot gas flow (HGS).

10. Device as claimed in claim 9 in which a thermal reactor essentially corresponding to the first thermal reactor (R1) in shape and dimension is provided as a second thermal reactor (R2) or the second thermal reactor (R2) has a bigger reactor volume and/or a larger cross-section as compared to the first thermal reactor (R1).

11. Device as claimed in any preceding claim 9 through 10 in which a pulsation reactor or a fluidized bed reactor is provided as a second thermal reactor (R2) and presents a bigger reactor volume and/or a larger cross-section as compared to the first thermal reactor (R1).

## Revendications

1. Procédé de production de particules fmes (P), en particulier avec un diamètre moyen compris entre 10 nm et 100 µm, dans un courant de gaz chaud pulsé (HGS) qui est généré dans une chambre de combustion (1) d'un réacteur thermique (R1) réalisé comme réacteur à pulsations, où un gaz de combustion (VG) pulsé par des vannes (2) et un combustible gazeux (BS) sont séparément alimentés de manière continue, les vannes (2) étant aussi bien ouvertes que fermées, et où un mélange de matière brute (RM) du gaz de combustion (VG) et du combustible gazeux (BS) est séparément alimenté dans la chambre de combustion (1) avec ou sans composants caloriques ou à un emplacement suivant par rapport au courant de gaz chaud (HGS), les particules (P) étant formées dans le courant de gaz chaud pulsé (HGS), et les particules formées (P) étant ensuite séparées du courant de gaz chaud (HGS).

2. Procédé selon la revendication 1, **caractérisé en ce qu'**au moins deux réacteurs thermiques (R1, R2) sont accouplés l'un à l'autre, le courant de gaz chaud pulsé (HGS) étant généré dans un premier réacteur thermique (R1) réalisé comme réacteur à pulsations, et les particules (P) étant formées au moins dans un deuxième réacteur thermique (R2) réalisé comme chambre de réaction, chambre de séchage, chambre de calcination et/ou comme chambre de cristallisation.

3. Procédé selon la revendication 1 ou la revendication 2, où au moins un des réacteurs thermiques (R1) est mis en service à une fréquence de combustion comprise entre 5 Hz et 150 Hz.

4. Procédé selon l'une des revendications précédentes, où le courant de gaz chaud (HGS) est refroidi au moins entre le premier et le deuxième étage de combustion par application d'un agent réfrigérant (KG), en particulier de gaz réfrigérant et/ou de liquide réfrigérant, et/ou le courant de gaz chaud (HGS) est conduit vers au moins un autre combustible (BS) en aval du premier réacteur thermique (R1).

5. Procédé selon l'une des revendications 1 à 4, où un courant de gaz chaud (HGS) de température comprise entre 750 °C et 1400 °C est généré par la combustion pulsée dans le premier réacteur thermique (R1) et où une température comprise entre 100 °C et 800 °C est réglée dans le deuxième réacteur thermique (R2) au moins par application d'un agent réfrigérant (KG) en amont de celui-ci.

6. Réacteur thermique (R1) pour la production de particules (P), en particulier avec un diamètre moyen compris entre 10 nm et 100 µm, comprenant
- une chambre de combustion (1) pour la génération d'un courant de gaz chaud pulsé (HGS), un gaz de combustion (VG) pulsé par des vannes (2) et un combustible gazeux (BS) étant séparément alimentables de manière continue au moins par une amenée (3), les vannes (2) étant aussi bien ouvertes que fermées, et un mélange de matière brute (RM) du gaz de combustion (VG) et du combustible gazeux (BS) étant séparément alimentable avec ou sans composants caloriques vers au moins un point d'amenée (6.1 à 6.n) de la chambre de combustion (1) ou vers un emplacement suivant par rapport au courant de gaz chaud (HGS),
- un tube de résonance (5) raccordé à la chambre de combustion (1), où le courant de gaz chaud pulsé (HGS) généré s'écoule hors de la chambre de combustion (1), et
- un dispositif séparateur (7), dans lequel les particules (P) formées sont séparées du courant de gaz chaud (HGS).

7. Réacteur thermique selon la revendication 6, où l'amenée (3) comportant en particulier plusieurs ouvertures de sortie pour le combustible (BS) est disposée côté admission dans un cône ouvert de la chambre de combustion (1).

8. Réacteur thermique selon l'une des revendications 6 et 7, où, côté sortie, un cône fermé de la chambre de combustion (1) est au moins pourvu d'un élément d'écoulement réalisé en particulier comme un tube de résonance (5) pénétrant au moins partiellement dans le cône fermé.

9. Dispositif de production de particules (P), en particulier avec un diamètre moyen compris entre 10 nm et 100 µm, comprenant au moins deux réacteurs thermiques (R1, R2), où lesdits deux réacteurs thermiques (R1, R2) sont accouplés l'un à l'autre et où le premier réacteur thermique (R1) réalisé comme réacteur à pulsations pour la génération d'un courant d'air chaud pulsé (HGS) comprend une chambre de combustion (1), un gaz de combustion (VG) pulsé par des vannes (2) et un combustible gazeux (BS) étant séparément alimentables de manière continue dans la chambre de combustion (1) au moins par une amenée (3), les vannes (2) étant aussi bien ouvertes que fermées, et un deuxième réacteur thermique (R2) étant raccordé à un tube de résonance (5) du premier réacteur thermique (R1), où le deuxième réacteur thermique (R2) sert à la formation de particules en tant que chambre de réaction, chambre de séchage, chambre de calcination et/ou en tant que chambre de cristallisation, où un mélange de matière brute (RM) du gaz de combustion (VG) et du combustible gazeux (BS) est séparément alimenté dans le premier et/ou le deuxième réacteur thermique (R1, R2) avec ou sans composants caloriques vers au moins un point d'amenée (6.1 à 6.n) de la chambre de combustion (1) ou vers un emplacement suivant par rapport au courant de gaz chaud (HGS), et où un dispositif séparateur (7) est disposé en aval du deuxième réacteur thermique (R2) par rapport au courant de gaz chaud (HGS) pour séparer les particules (P) formées du courant de gaz chaud (HGS).

10. Dispositif selon la revendication 9, où un réacteur thermique de forme et de dimensions sensiblement correspondantes au premier réacteur thermique (R1) est prévu comme deuxième réacteur thermique (R2), ou bien où le deuxième réacteur thermique (R2) présente un volume de réacteur supérieur par rapport au premier réacteur thermique (R1) et/ou une section transversale supérieure.

11. Dispositif selon l'une des revendications 9 et 10, où un réacteur à pulsations ou un réacteur à turbulences est prévu comme deuxième réacteur thermique (R2), lequel présente un volume de réacteur supérieur par rapport au premier réacteur thermique (R1) et/ou une section transversale supérieure.
